# EUROPEAN PATENT SPECIFICATION

(11) **EP 2 380 085 B1**
(45) Date of publication and mention of the grant of the patent: **22.08.2012**
(21) Application number: 10725646.3
(22) Date of filing: 28.05.2010
(51) Int. Cl.: G06F 13/38, G06F 13/42

(54) **DETECTING LOST AND OUT OF ORDER POSTED WRITE PACKETS IN A PERIPHERAL COMPONENT INTERCONNECT (PCI) EXPRESS NETWORK**
ERKENNUNG VERLORENER UND IRREGULÄR GEPOSTETER SCHREIBPAKETE IN EINEM PCI-EXPRESSNETZWERK
DÉTECTION DE PAQUETS D'ÉCRITURE PERDUS ET POSTÉS EN DÉSORDRE DANS UN RÉSEAU EXPRESS D'INTERCONNEXION DE COMPOSANTS PÉRIPHÉRIQUES (PCI)

(30) Priority: 02.06.2009 US 476861
(43) Date of publication of application: 26.10.2011
(73) Proprietor: International Business Machines Corporation, Armonk, NY 10504 (US)
(72) Inventor: GREGG, Thomas, Poughkeepsie, New York 12601-5400 (US)
(74) Representative: Stretton, Peter John
(86) International application number: PCT/EP2010/057381
(87) International publication number: WO 2010/139612

(56) References cited:
- WO-A2-2005/091156
- US-A1- 2007 028 017
- US-A1- 2008 086 584
- US-A1- 2009 248 942

## Description

The present disclosure relates generally to computer systems, and in particular, to writing data in a peripheral component interconnect express (PCIe) network.

Peripheral component interconnect (PCI) is a computer bus architecture for attaching hardware devices in a computer. PCI express (PCIe) is a newer version of PCI that utilizes point-to-point serial links instead of the shared parallel bus architecture employed by PCI. A computer system that employs PCIe communicates by sending packets.

The document WO 2005/091156 A2 is disclosing a communications arrangement implemented for tag-field type communications signalling. A first PCI Express endpoint device is adapted to communicate selected information (e.g. synchronous event signals) to a second PCI Express endpoint device using the tag field of data posted to a PCI Express communications link. The tag field is set to indicate a characteristic of the synchronous event, and passed from the first PCI Express endpoint device to the second PCI Express endpoint device.

### BRIEF SUMMARY

The present invention accordingly provides, in a first aspect, a system for processing packets in a PCIe network, the system comprising: a receiver in communication with a PCIe switch for receiving a PCIe posted write packet, the PCIe posted write packet including a received tag identifier and a requesting device identifier identifying a requesting device; a storage mechanism for storing an expected tag identifier for the requesting device; a comparator for comparing the received tag identifier to the expected tag identifier and setting an error flag in response to the received tag identifier not matching the expected tag identifier.

The system may further comprise an incrementor for incrementing the expected tag identifier for the requesting device in response to the comparing being completed. Preferably, the received tag identifier and the expected tag identifier are synchronized periodically between the requesting device and the receiving device. Preferably, the receiving device is a PCIe root complex device, and the storage mechanism includes a device table that is indexed by requesting device identifiers. Preferably, the receiving device is a PCIe endpoint, and the storage mechanism includes a register corresponding to the requesting device. The system may further comprise a posted write packet mechanism at a requesting device for accessing a PCIe posted write packet that identifies a receiving device and for inserting a current tag identifier corresponding to the receiving device into a tag field in the posted write packet; a storage mechanism at the requesting device for storing the current tag identifier corresponding to the receiving device; a transmitter at the requesting device in communication with a PCIe switch for transmitting the PCIe posted write packet to the receiving device via the PCIe switch. The system may further comprise an incrementor at the requesting device for incrementing the current tag identifier corresponding to the receiving device in response to the inserting being completed.

In a second aspect, the present invention provides a method for processing packets in a PCIe network, the method comprising: receiving a PCIe posted write packet at a receiving device, the PCIe posted write packet including a received tag identifier and a requesting device identifier identifying a requesting device; determining an expected tag identifier for the requesting device; comparing the received tag identifier to the expected tag identifier; and setting an error flag in response to the received tag identifier not matching the expected tag identifier. Preferably, the method further comprises incrementing the expected tag identifier for the requesting device in response to the comparing being completed. The method may further comprise accessing at a requesting device a PCIe posted write packet identifying a receiving device; determining a current tag identifier corresponding to the receiving device; inserting the current tag identifier into a tag field in the posted write packet; and transmitting posted write packet to the receiving device. The method may further comprise incrementing the current tag identifier corresponding to the receiving device in response to the inserting being completed. Preferably, the current tag identifier at the requesting device is synchronized periodically with an expected tag identifier at the receiving device. Preferably, the requesting device is a root complex device in the PCIe network, and the determining a current tag identifier includes accessing one or more of an address lookup table and a down-bound tag table. Preferably, the requesting device is an endpoint in a PCIe network, and the determining a current tag identifier includes reading a register corresponding to the receiving device.

In a third aspect, there is provided a computer program comprising computer program code to, when loaded into a computer system and executed thereon, cause said computer system to perform all the steps of the method of the second aspect.

An exemplary embodiment includes a computer program product for processing packets in a peripheral component interconnect express (PCIe) network. The computer program product includes a tangible storage medium readable by a processing circuit and storing instructions for execution by the processing circuit for performing a method. The method includes receiving a PCIe posted write packet at a receiving device, the PCIe posted write packet including a received tag identifier and a requesting device identifier identifying a requesting device. An expected tag identifier is determined for the requesting device. The received tag identifier is compared to the expected tag identifier. An error flag is set if the received tag identifier does not match the expected tag identifier.

Another exemplary embodiment is a system for processing packets in a PCIe network. The system includes a receiver, in communication with a PCIe switch, for receiving a PCIe posted write packet. The PCIe posted write packet includes a received tag identifier and a requesting device identifier identifying a requesting device. The system also includes a storage mechanism for storing an expected tag identifier for the requesting device. The system further includes a comparator for comparing the received tag identifier to the expected tag identifier and setting an error flag if the received tag identifier does not match the expected tag identifier.

Another exemplary embodiment is a method for processing packets in a PCIe network. The method includes receiving a PCIe posted write packet at a receiving device, the PCIe posted write packet including a received tag identifier and a requesting device identifier identifying a requesting device. An expected tag identifier is determined for the requesting device. The received tag identifier is compared to the expected tag identifier. An error flag is set if the received tag identifier does not match the expected tag identifier.

A further exemplary embodiment is computer program product for processing packets in a PCIe network. The computer program product includes a tangible storage medium readable by a processing circuit and storing instructions for execution by the processing circuit for performing a method. The method includes accessing, at a requesting device, a PCIe posted write packet identifying a receiving device. A current tag identifier corresponding to the receiving device is determined. The current tag identifier is inserted into a tag field in the posted write packet. The posted write packet is transmitted to the receiving device via a PCIe network.

A further exemplary embodiment includes a system for processing packets in a PCIe network. The system includes a posted write packet mechanism at a requesting device for accessing a PCIe posted write packet, the PCIe posted write packet identifying a receiving device, and for inserting a current tag identifier corresponding to the receiving device into a tag field in the posted write packet. The system also includes a storage mechanism at the requesting device for storing the current tag identifier corresponding to the receiving device. The system further includes a transmitter at the requesting device in communication with a PCIe switch, the transmitter for transmitting the PCIe posted write packet to the receiving device via the PCIe switch.

### BRIEF DESCRIPTION OF THE DRAWINGS

A preferred embodiment of the present invention will now be described, by way of example only, with reference to the accompanying drawings, in which:
FIG. 1 depicts a PCIe network that may be implemented by an exemplary embodiment;
FIG. 2 depicts a PCIe packet header and payload format that may be implemented by an exemplary embodiment;
FIG. 3 depicts a process for generating a posted write packet using sequential tags that may be implemented by an exemplary embodiment;
FIG. 4 depicts a process for receiving a posted write packet using sequential tags that may be implemented by an exemplary embodiment;
FIG. 5 depicts a PCIe network, including a root complex and a plurality of end points that may be implemented by an exemplary embodiment;
FIG. 6 depicts a PCI capabilities structure that may be implemented by an exemplary embodiment; and
FIG. 7 depicts an article of manufacture that may be implemented by an exemplary embodiment.

### DETAILED DESCRIPTION OF A PREFERRED EMBODIMENT

Peripheral component interconnect (PCI) and PCI express (PCIe) implement the concept of a "posted write memory request" in both the up-bound and down-bound directions, where packets containing a posted write command, a write address, and write data are posted at intermediate locations (e.g., PCIe switches) before reaching the final destination where the write will occur (e.g., an endpoint or root complex). Posted write packets have no associated completions, so there is no indication if they are lost and no mechanism to detect their loss. One problem with PCIe is that with the added complexity of PCIe, and PCIe to PCIe bridges, root complexes, switches, and end points there is a small, but not zero, probability of silently dropping, duplicating, or rearranging posted write memory requests. Thus, in the event of a packet loss, a duplicate packet, or a packet being out of order, the use of posted write memory requests in PCIe will leave a hole (or unknown value) in the host or adapter memory, and these holes may be a data integrity exposure.

An exemplary embodiment includes a new definition of the PCIe defined header tag field in the transaction identifier of the PCIe packet header. This new definition uses the tag field as an end-to-end sequence number that is generated by the requester and verified by the completer. A new capabilities structure is defined to control and initialize the newly defined tag field. In exemplary embodiments, the PCIe switches remain unaffected by the new use of the tag field to provide end-to-end checking for posted memory write packets. Details relating to PCIe are described in "PCI Express Base Specification, Revision 2.0", PCI-SIG, December 20, 2006, which is incorporated herein by reference in its entirety.

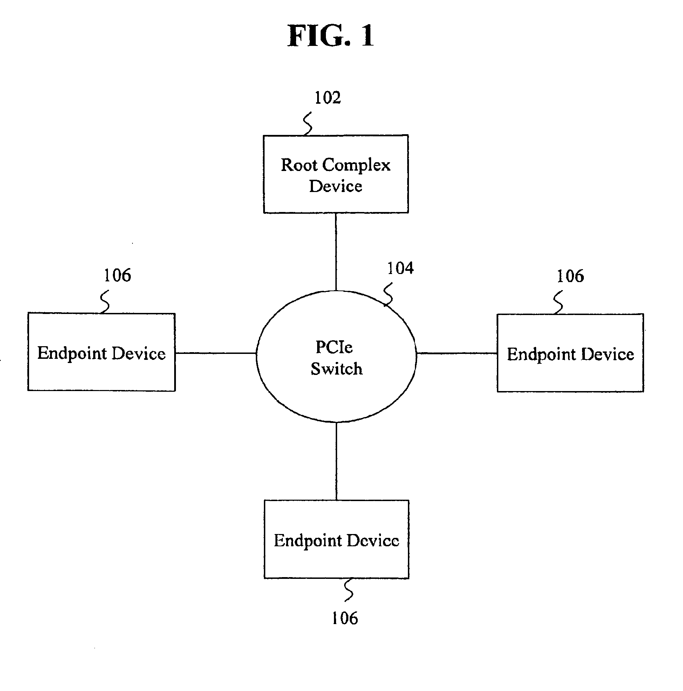

FIG. 1 depicts a PCIe network that may be implemented by an exemplary embodiment. FIG. 1 includes a root complex device 102 (e.g., located in a host system) and a plurality of endpoint devices 106 (e.g., a storage controller, a network adapter, etc.) in communication via a PCIe switch 104. As used herein, the term "requesting device" refers to a device in a PCIe network where the posted memory write request is generated. The requesting device may be either a root complex device 102 or an endpoint device 106. As used herein, the term "receiving device" refers to a device in a PCIe network that receives a posted memory write request and completes the memory write (i.e., writes specified data to a specified address). The receiving device may be either a root complex device 102 or an endpoint device 106. The receiving device may also be referred to herein as a "completer" or "completer device." As used herein, the term "PCIe device" refers to a device that communicates in the PCIe network (e.g., via the PCIe switch 104). Both the root complex device 102 and endpoint devices 106 are examples of PCIe devices.

In an exemplary embodiment, the PCIe switch 104 is a transparent PCI-based multi-host switch 104, such as the one disclosed in U.S. Patent Number 7,519,761 to Gregg, of common assignment herewith, that may be configured with multiple north facing ports to couple the switch 104 to multiple hosts. The multi-host switch 104 can be included in a variety of switch configurations, including configurations having one multi-host switch, configurations having multiple multi-host switches, and configurations including one or more multi-host switches and one or more single host switches. The switch 104 is designed to include controls to accurately route a packet through the switch.

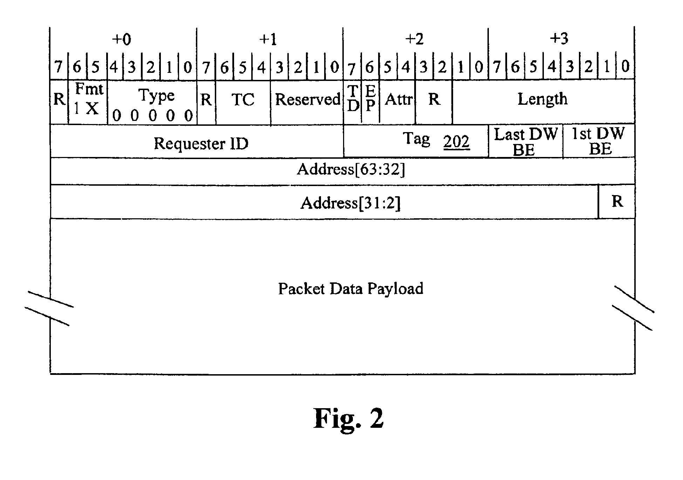

FIG. 2 depicts a PCIe packet header and payload format that may be implemented by an exemplary embodiment. A standard PCIe packet header format is implemented by an exemplary embodiment, with one exception: that the tag field 202 is redefined as an end-to-end sequence number that is generated by a requester of a posted write and verified by a completer of the posted write. By using the tag field 202 in this manner, the completer of the posted write can verify that all packets sent by the requester have been received (i.e., in order and once).

The exemplary posted memory write request packet depicted in FIG. 2 is identified by a "Type" field of '00000'b. If the address field is eight bytes as shown, then the format field ("Fmt") is '11'b, and if the address field is four bytes, the format field is '10'b. The "'R" bits and "Reserved" field are reserved and set to zero. The "TC" field is the traffic class, the "TD" field indicates if a transaction layer packet (TLP) digest (four byte cyclical redundancy check or "CRC") is appended to the end of the packet. The "EP" field indicates if the TLP is poisoned, the "Attr" (attribute) field includes relaxed ordering and no snoop bits, and the "Length" field is the length of the packet data payload in four byte quantities. The "Requester ID" (RID) field indicates the requester's bus number (eight bits), device number (three bits), and function number (five bits).

The "Last DW BE" and "1st DW BE" fields are double word byte enables; each is four bits and indicates the valid payload bytes in the last and first double words (four byte double words). The address fields point to where the packet data payload is to be written at the completer (also referred to herein as the receiving device). Eight byte addresses are contained in "Address[63:32]" and "Address[31:2]" while four byte addresses are contained in Address[31:2] in which case Address[63:32] is not present. The "Packet Data Payload" field which contains the data to be written may be from four to 4096 bytes in length.

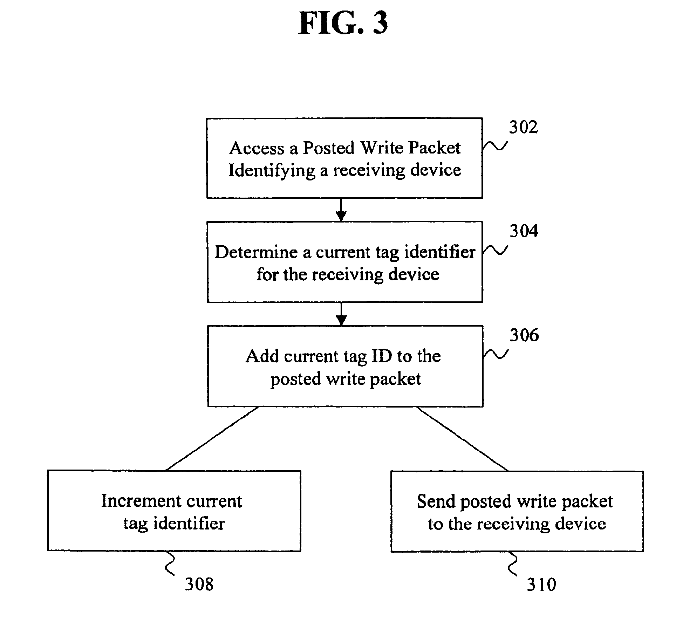

FIG. 3 depicts a process for generating a posted write packet using sequential tags that may be implemented by an exemplary embodiment. The process depicted in FIG. 3 includes additional processing (i.e., in addition to the standard PCIe processing) that is implemented by exemplary embodiments of a requesting device to utilize the tag field 202 as a sequential counter to identify lost, duplicated, and out of order packets. All or portions of the processing depicted in FIG. 3 may be implemented by a posted write packet mechanism. The processing depicted in FIG. 3 may be implemented by hardware and/or software and located within or accessible by a requesting device. At block 302, a posted write packet for a receiving device has been generated by a requesting device. The posted write packet identifies a receiving device, for example by the lower and upper address fields. At block 304, the requester device determines a current tag identifier for the receiving device. In exemplary embodiments, the current tag identifier is stored in a register, back-up table or other storage mechanism on, or accessible by, the requester device. The current tag identifier is written to the tag field 202 in the posted write packet at block 306. The current tag identifier for the receiving devices is incremented (e.g., by an incrementor) at block 308 and at block 310, the posted write data packet is then sent (e.g., via a transmitter) to the receiving device. In an exemplary embodiment, the current tag identifier is only written to the tag field when the packet indicates a posted write data request.

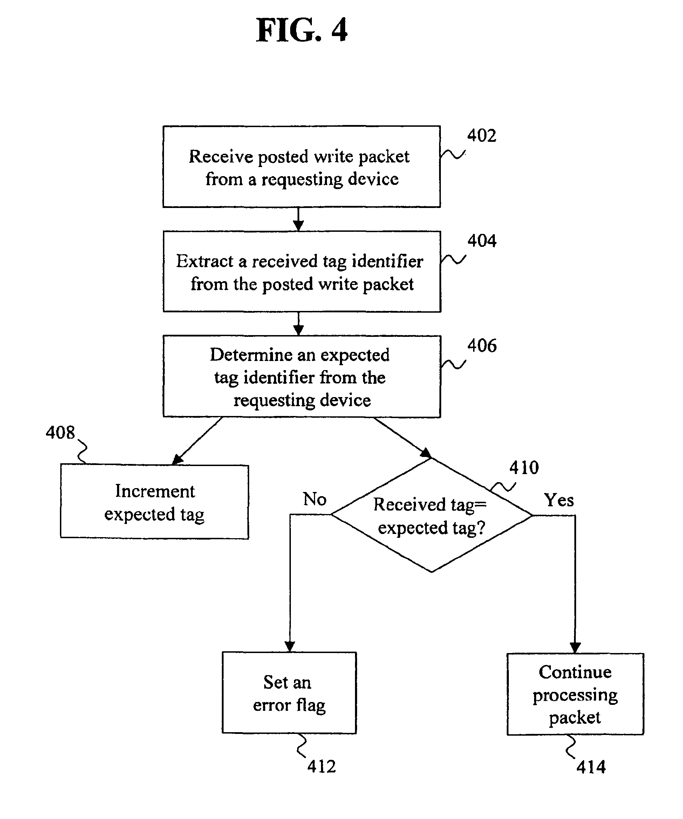

FIG. 4 depicts a process for receiving a posted write packet using sequential tags that may be implemented by an exemplary embodiment. The process depicted in FIG. 4 includes additional processing (i.e., in addition to the standard PCIe processing) that is implemented by exemplary embodiments of a receiving device to utilize the tag field 202 as a sequential counter to identify lost, duplicated, and out of order packets. The processing may be implemented by hardware and/or software and located within or accessible by a receiving device. At block 402, a posted write packet is received (e.g., via a receiver) at a receiving device, the posted write packet is from a requesting device. At block 404, a received tag identifier is extracted from the tag field 202 of the received packet. At block 406, an expected tag identifier associated with the requesting device is determined. In exemplary embodiments, the expected tag identifier for the requesting device is stored in a register, look up table or other storage mechanism on, or accessible by, the receiving device. At block 410, it is determined (e.g., using a comparator) if the received tag identifier is equal to the expected tag identifier. If they are not equal, then block 412 is performed and an error flag indicating a lost, duplicated, or out of sequence packet is set. In an exemplary embodiment, setting the error flag causes standard error PCIe error/recovery processing to be performed. If the received tag is equal to the expected tag, as determined at block 410, then processing of the received packet continues at block 414. At block 408, the expected tag identifier associated with the requesting device is incremented (e.g., using an incrementor) in preparation for receiving the next packet.

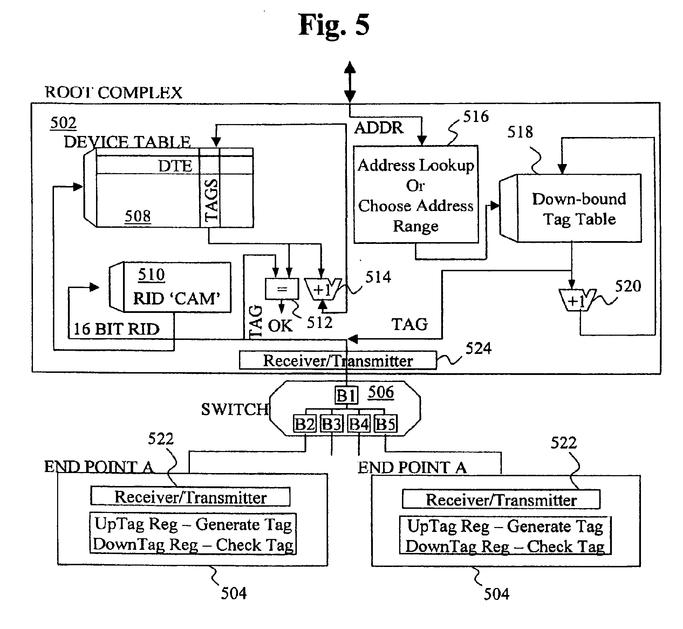

FIG. 5 depicts a PCIe network, having a root complex 502 and a plurality of end points 504 that are interconnected by a PCIe switch 506 that includes a plurality of PCIe bridges (in this example, B1-B5). The PCIe network, or system, depicted in FIG. 5 may be implemented by an exemplary embodiment to detect lost, duplicate, and out of order posted write packets. In the embodiment depicted in FIG. 5, each end point 504 communicates with a single device, the root complex 502, however in other exemplary embodiments, end points communicate with a plurality of devices.

Each of the end points 504 depicted in FIG. 5 include a single register containing a current tag identifier value for posted memory write requests that it sends to the root complex 502 and a single register containing an expected tag identifier value for posted memory write requests that it receives from the root complex 502. In addition, each of the end points 504 include a receiver/transmitter 522 for receiving and transmitting packets, one or two incrementors for incrementing the tag identifier values, and one or two comparators for comparing an expected tag identifier value and a received tag identifier value. In an exemplary embodiment, an end point 504 may have either a receiver or a transmitter depending on whether the end point 504 is solely a receiving device or solely a requesting device. In an exemplary embodiment, where an end point communicates with more than one device, the end point includes at least an additional register(s) for storing an additional tag(s) and optionally, an additional incrementor and/or comparator.

The exemplary root complex 502 depicted in FIG. 5 includes a receiver/transmitter 524, a device table 508, a requester identifier (RID) content addressable memory (CAM), a comparator 512 and an incrementor 514 that are utilized when an up-bound posted memory write packet is received from an end point 504. As is known in the art, the use of a CAM is one way of associating a RID with an end point. Other methods of making this association may be implemented by alternate exemplary embodiments. As depicted in FIG. 5, the end point 504 includes a register ("UpTagReg") to store a current tag identifier value of tag to be added to up-bound posted write request packets sent to the root complex 502. When a packet is received in an up-bound direction, the root complex 502 is a receiving device and the end point 504 is a requesting device. In an exemplary embodiment, the root complex 502 may have either a receiver or a transmitter depending on whether the root complex 502 is solely a receiving device or solely a requesting device. In an exemplary embodiment, standard PCIe processing is performed along with the additional processing required for implementing the sequential tags.

As depicted in FIG. 5, the packet is received via the receiver/transmitter 524 by root complex 502 and the RID CAM 510 is utilized as an index into the device table 508. The posted write packet includes a tag field 202 that contains a received tag identifier that was inserted into the packet by the end point 504. In the embodiment depicted in FIG. 5, an expected value of the tag field from the requesting device is stored in the PCIe device table 508. The expected value of the tag identifier, as determined by the tag field value in the device table 508, is compared to the received tag field using the comparator 512. A flag is set, or a recovery process is initiated in response to the two values not being equal. The expected value of the tag identifier is incremented by the incrementor 514 and stored back into a location in the device table 508 that corresponds to the requesting device.

The exemplary root complex 502, depicted in FIG. 5, also includes an address lookup table 516, a down-bound tag table 518 and a second incrementor 520 that are utilized for generating down-bound posted memory write packets to be transmitted (e.g., via the receiver/transmitter 524) to an end point 504. When a down-bound packet is generated, the root complex 502 is a requesting device and the end point 504 is a receiving device. In an exemplary embodiment, standard PCIe processing is performed along with the additional processing required for implementing the sequential tags.

As depicted in FIG. 5, the posted packet is generated by the root complex 502 and the address lookup table 516 is utilized as an index into the down-bound tag table 518 to determine a current tag identifier for the receiving device. In an exemplary embodiment, the down-bound tag table contains a one-byte current tag identifier associated with each of the endpoints 504. The current tag identifier is inserted into the tag field 202 of posted write packet before it is transmitted to the specified receiving device. The current tag identifier is incremented by the incrementor 520 and stored back into the down-bound tag table 518. When the packet is received at the receiving device (e.g., the end point 504), the receiving device verifies that the received tag identifier is equal to an expected tag identifier that is stored in a register ("DownTagReg"). If the values don't match, then a flag is set to indicate an error or to initiate a recovery process.

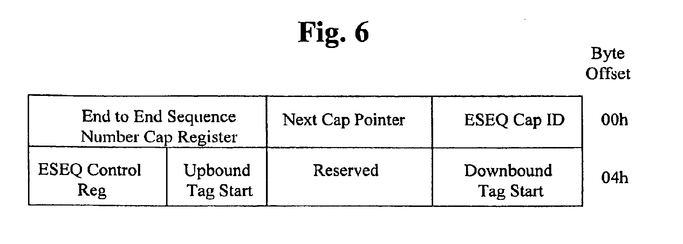

With respect to an exemplary embodiment of up-bound posted write memory requests and as depicted in FIG. 5, there are multiple endpoints 504 (e.g., including virtual functions or "VFs", physical functions, or "PFs", etc.) each with a unique RID that can send packets to the root complex 502. In the embodiment depicted in FIG. 5, the up-bound switch routing is implicit because, in this example, access controls services (ACS) forces all requests to go the root complex 502. In an exemplary embodiment each endpoint 504 (and RID) maintains a running current tag value. The running current tag value is initialized at system start up through an end-to-end sequence number (ESEQ) capability structure, such as the one depicted in FIG. 6 below. As requests are generated, the tag field is incremented for each request. This use of the tag field is largely consistent with PCIe tag usage, however in exemplary embodiments, the tag field is no longer an opaque handle and it has rules for generation. In an exemplary embodiment, the tag values wrap from "0xFF" to "0x00." The range of the tag values is chosen to ensure that at any point in time the tag field value is a unique identifier. In an exemplary embodiment, the root complex 502 maintains an expected tag for each RID. In an exemplary embodiment, mismatches in the tag cause the root complex 502 to put the end point into the error state.

In an exemplary embodiment, the up-bound tag sequence function shown in root complex 502 may be implemented as an extension to commonly available address translation and protection mechanisms. For example, Advanced Micro Devices (AMD) has defmed an I/O memory management unit (IOMMU) and Intel has defined direct memory access (DMA) remapping to perform address translation and protection. In both of these implementations, the identity of the requester (RID) is used to determine the individual requesters address translation tables and access rights. Device tables contain information concerning each individual requester. In an exemplary embodiment, the tag sequence number function is added to existing device tables.

With-respect to an exemplary embodiment of down-bound posted write memory requests and as depicted in FIG. 5, down-bound requests are address routed. The root complex 502 maintains the relationship between the PCIe address ranges and the PCIe end points. The root complex 502 maintains a running current tag value for each PCIe end point. As depicted in FIG. 5, each endpoint 504 maintains a running current tag value that is initialized at system start up through an ESEQ capability structure, such as the one depicted in FIG. 6 below. In an exemplary embodiment, as requests are generated at the root complex 502, the tag field is incremented for each request. In an exemplary embodiment, the tag values wrap from "0xFF" to "0x00." The range of the tag values is chosen to ensure that at any point in time the tag field value is a unique identifier. In an exemplary embodiment, mismatches in the tag values cause the endpoint to indicate an error and the AER registers and reporting mechanisms of PCIe may be utilized to report the error.

FIG. 6 depicts a PCI capabilities structure that may be implemented by an exemplary embodiment to initialize registers used in tag sequencing of posted write packets. In an exemplary embodiment, this PCI capabilities structure is applied to pairs of requesting and receiving devices in the PCIe network to synchronize both ends of each pair. The synchronizing is performed periodically, meaning that it is performed at system initialization and optionally as part of a recovery action. The exemplary PCI capabilities structure depicted in FIG. 6 sets a bit in an end to end sequence number capabilities register field to indicate that up-bound ESEQ generation is supported and the capabilities structure sets a bit in the end to end sequence number capabilities register field to indicate that down-bound ESEQ generation is supported. As is known in the art, the next capabilities pointer field points to the next capabilities structure in the list. The ESEQ capabilities identifier field defines a unique capabilities number associated with the present capabilities structure. The exemplary command depicted in FIG. 6 sets a bit in an ESEQ control register to enable up-bound ESEQ generation using an up-bound start tag, sets a bit in the ESEQ control register to enable down-bound ESEQ checking using a down-bound start tag, and sets a bit to be utilized to indicate that a down-bound ESEQ error has been detected (or alternatively, indicates that the advanced error reporting or "AER" mechanism of PCIe is to be utilized). The up-bound tag start field contains the starting value for up-bound ESEQ generation and the down-bound tag start field contains the starting value for down-bound ESEQ checking.

Technical effects and benefits of exemplary embodiments include the ability to verify that posted memory write requests in a PCIe network have been received in order and once. This may lead to an improvement in PCIe reliability.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated.

As will be appreciated by one skilled in the art, the present invention may be embodied as a system, method, or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product embodied in any tangible medium of expression having computer-usable program code embodied in the medium. Any combination of one or more computer-usable or computer-readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CDROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The preferred embodiment of the present invention is described with reference to flowchart illustrations and/or block diagrams of methods, apparatus (systems) and computer programs. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

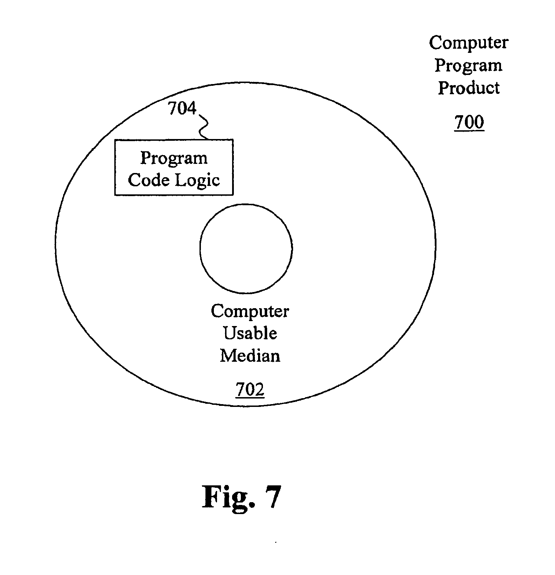

As described above, embodiments can be embodied in the form of computer-implemented processes and apparatuses for practicing those processes. In exemplary embodiments, the invention is embodied in computer program code executed by one or more network elements. Embodiments include a computer program product 700 as depicted in FIG. 7 on a computer usable medium 702 with computer program code logic 704 containing instructions embodied in tangible media as an article of manufacture. Exemplary articles of manufacture for computer usable medium 702 may include floppy diskettes, CD-ROMs, hard drives, universal serial bus (USB) flash drives, or any other computer-readable storage medium, wherein, when the computer program code logic 704 is loaded into and executed by a computer, the computer becomes an apparatus for practicing the invention. Embodiments include computer program code logic 704, for example, whether stored in a storage medium, loaded into and/or executed by a computer, or transmitted over some transmission medium, such as over electrical wiring or cabling, through fiber optics, or via electromagnetic radiation, wherein, when the computer program code logic 704 is loaded into and executed by a computer, the computer becomes an apparatus for practicing the invention. When implemented on a general-purpose microprocessor, the computer program code logic 704 segments configure the microprocessor to create specific logic circuits.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

## Claims

1. A system for processing packets in a PCIe network, the system comprising:
a receiver in communication with a PCIe switch for receiving a PCIe posted write packet, the PCIe posted write packet including a received tag identifier and a requesting device identifier identifying a requesting device; **characterized in that** the system further comprising
a storage mechanism for storing an expected tag identifier for the requesting device; and
a comparator for comparing the received tag identifier to the expected tag identifier and setting an error flag in response to the received tag identifier not matching the expected tag identifier.

2. The system of claim 1, further comprising an incrementor for incrementing the expected tag identifier for the requesting device in response to the comparing being completed.

3. The system of claim 1 or claim 2, wherein the received tag identifier and the expected tag identifier are synchronized periodically between the requesting device and the receiving device.

4. The system of any preceding claim, wherein the receiving device is a PCIe root complex device, and the storage mechanism includes a device table that is indexed by requesting device identifiers.

5. The system of any preceding claim, wherein the receiving device is a PCIe endpoint, and the storage mechanism includes a register corresponding to the requesting device.

6. The system of any preceding claim, further comprising a posted write packet mechanism at a requesting device for accessing a PCIe posted write packet that identifies a receiving device and for inserting a current tag identifier corresponding to the receiving device into a tag field in the posted write packet;
a storage mechanism at the requesting device for storing the current tag identifier corresponding to the receiving device;
a transmitter at the requesting device in communication with a PCIe switch for transmitting the PCIe posted write packet to the receiving device via the PCIe switch.

7. The system of claim 6, further comprising an incrementor at the requesting device for incrementing the current tag identifier corresponding to the receiving device in response to the inserting being completed.

8. A method for processing packets in a PCIe network, the method comprising:
receiving a PCIe posted write packet at a receiving device, the PCIe posted write packet including a received tag identifier and a requesting device identifier identifying a requesting device;
determining an expected tag identifier for the requesting device;
comparing the received tag identifier to the expected tag identifier; and
setting an error flag in response to the received tag identifier not matching the expected tag identifier.

9. The method of claim 8, wherein the method further comprises incrementing the expected tag identifier for the requesting device in response to the comparing being completed.

10. The method of claim 8 or claim 9, further comprising accessing at a requesting device a PCIe posted write packet identifying a receiving device;
determining a current tag identifier corresponding to the receiving device;
inserting the current tag identifier into a tag field in the posted write packet; and transmitting posted write packet to the receiving device.

11. The method of any of claims 8 to 10, further comprising incrementing the current tag identifier corresponding to the receiving device in response to the inserting being completed.

12. The method of any of claims 8 to 11, wherein the current tag identifier at the requesting device is synchronized periodically with an expected tag identifier at the receiving device.

13. The method of any of claims 8 to 12, wherein the requesting device is a root complex device in the PCIe network, and the determining a current tag identifier includes accessing one or more of an address lookup table and a down-bound tag table.

14. The method of any of claims 8 to 13, wherein the requesting device is an endpoint in a PCIe network, and the determining a current tag identifier includes reading a register corresponding to the receiving device.

15. A computer program comprising computer program code to, when loaded into a computer system and executed thereon, cause said computer system to perform all the steps of the method of any of claims 8 to 14.

## Patentansprüche

1. System zum Verarbeiten von Paketen in einem PCIe-Netzwerk, wobei das System das Folgende umfasst:
einen Empfänger im Datenaustausch mit einem PCIe-Vermittler zum Empfangen eines über eine PCIe versandten Schreibpakets, wobei das über eine PCIe versandte Schreibpaket eine empfangene Erkennungsmarke und einen Bezeichner der Anforderungseinheit beinhaltet, der eine Anforderungseinheit bezeichnet;
**dadurch gekennzeichnet, dass** das System ferner
eine Speichereinheit zum Speichern einer erwarteten Erkennungsmarke für die Anforderungseinheit; und
eine Vergleichseinheit zum Vergleichen der empfangenen Erkennungsmarke mit der erwarteten Erkennungsmarke und Setzen einer Fehlermarke in Reaktion darauf umfasst, dass die empfangene Erkennungsmarke nicht mit der erwarteten Erkennungsmarke übereinstimmt.

2. System nach Anspruch 1, das ferner einen Aufwärtszähler (incrementor) zum Erhöhen der erwarteten Erkennungsmarke für die Anforderungseinheit in Reaktion darauf umfasst, dass der Vergleich abgeschlossen wurde.

3. System nach Anspruch 1 oder 2, wobei die empfangene Erkennungsmarke und die erwartete Erkennungsmarke periodisch zwischen der Anforderungs- und der Empfangseinheit synchronisiert werden.

4. System nach einem vorangehenden Anspruch, wobei es sich bei der Empfangseinheit um eine PCIe-Wurzel-Complex-Einheit handelt und der Speichermechanismus eine Einheitentabelle beinhaltet, die mit den Bezeichnern der Anforderungseinheiten indiziert ist.

5. System nach einem vorangehenden Anspruch, wobei es sich bei der Empfangseinheit um einen PCIe-Endpunkt handelt und der Speichermechanismus ein Register beinhaltet, das zu der Anforderungseinheit gehört.

6. System nach einem vorangehenden Anspruch, das ferner Folgendes umfasst: einen Mechanismus für ein versandtes Schreibpaket an einer Anforderungseinheit zum Zugreifen auf ein versandtes PCIe-Schreibpaket, das eine Anforderungseinheit bezeichnet, und zum Einfügen einer momentanen Erkennungsmarke, die der Empfangseinheit entspricht, in ein Merkmalfeld in dem versandten Schreibpaket;
einen Speichermechanismus an der Anforderungseinheit zum Speichern der momentanen Erkennungsmarke, die der Empfangseinheit entspricht;
einen Sender an der Anforderungseinheit im Datenaustausch mit einem PCIe-Vermittler zum Übertragen des über eine PCIe versandten Schreibpakets an die Empfangseinheit über den PCIe-Vermittler.

7. System nach Anspruch 6, das ferner einen Aufwärtszähler an der Anforderungseinheit umfasst, um in Reaktion auf das Abschließen des Einfügens die momentane Erkennungsmarke zu erhöhen, die zu der Empfangseinheit gehört.

8. Verfahren zum Verarbeiten von Paketen in einem PCIe-Netzwerk, wobei das Verfahren das Folgende umfasst:
Empfangen eines über eine PCIe versandten Schreibpakets an einer Empfangseinheit, wobei das über eine PCIe versandte Schreibpaket eine empfangene Erkennungsmarke und einen Empfangseinheit-Bezeichner beinhaltet, der eine Anforderungseinheit bezeichnet.
Bestimmen einer erwarteten Erkennungsmarke für die Anforderungseinheit;
Vergleichen der empfangenen Erkennungsmarke mit der erwarteten Erkennungsmarke; und
Setzen einer Fehlermarke in Reaktion darauf, dass die empfangene Erkennungsmarke nicht mit der erwarteten Erkennungsmarke übereinstimmt.

9. Verfahren nach Anspruch 8, wobei das Verfahren ferner das Erhöhen der erwarteten Erkennungsmarke für die Anforderungseinheit in Reaktion darauf umfasst, dass das Vergleichen abgeschlossen ist.

10. Verfahren nach Anspruch 8 oder 9, das ferner das Zugreifen auf ein über eine PCIe versandtes Schreibpaket, das eine Empfangseinheit bezeichnet, an einer Anforderungseinheit umfasst;
Bestimmen einer momentanen Erkennungsmarke, die zu der Empfangseinheit gehört.
Einfügen der momentanen Erkennungsmarke in ein Merkmalfeld in dem versandten Schreibpaket; und
Übertragen des versandten Schreibpakets an die Empfangseinheit.

11. Verfahren nach einem der Ansprüche 8 bis 10, das ferner das Erhöhen der momentanen Erkennungsmarke, die zu der Empfangseinheit gehört, in Reaktion auf das Abschließen des Einfügens umfasst.

12. Verfahren nach einem der Ansprüche 8 bis 11, wobei das momentane Erkennungsmerkmal an der Anforderungseinheit periodisch mit einem erwarteten Erkennungsmerkmal an der Empfangseinheit synchronisiert wird.

13. Verfahren nach einem der Ansprüche 8 bis 12, wobei es sich bei der Anforderungseinheit um eine Wurzel-Complex-Einheit in dem PCIe-Netzwerk handelt und das Bestimmen eines momentanen Erkennungsmerkmals das Zugreifen auf eine oder mehrere Adressen-Verzeichnistabellen und eine abwärts verknüpfte Markertabelle (down-bound tag table) umfasst.

14. Verfahren nach einem der Ansprüche 8 bis 13, wobei es sich bei der Anforderungseinheit um einen Endpunkt in einem PCIe-Netzwerk handelt und das Bestimmen einer momentanen Erkennungsmarke das Lesen eines Registers beinhaltet, das zu der Empfangseinheit gehört.

15. Computerprogramm, das Computerprogramm-Code umfasst, um das Computersystem zum Ausführen aller Schritte des Verfahrens nach einem der Ansprüche 8 bis 14 zu veranlassen, wenn das Computerprogramm in ein Computersystem geladen und darauf ausgeführt wird.

## Revendications

1. Système pour le traitement de paquets dans un réseau PCIe, le système comprenant :
un récepteur en communication avec un commutateur PCIe pour la réception d'un paquet d'écriture posté via un PCIe, le paquet d'écriture posté via un PCIe comprenant un identifiant de balise reçu et un identifiant d'unité de requête identifiant une unité de demande, **caractérisé en ce que** le système comprend en outre :
un mécanisme de stockage pour le stockage d'un identifiant de balise attendu pour l'unité requérante ; et
un comparateur pour comparer l'identifiant de balise reçu avec l'identifiant de balise attendu et le placement d'une balise d'erreur en réponse à l'identifiant de balise reçu ne correspondant pas à l'identifiant de balise attendu.

2. Système selon la revendication 1, comprenant en outre un incrémenteur pour incrémenter l'identifiant de balise attendu pour l'unité requérante en réponse à la comparaison achevée.

3. Système selon la revendication 1 ou 2, dans lequel l'identifiant de balise reçu et l'identifiant de balise attendu sont synchronisés périodiquement entre l'unité requérante et l'unité de réception.

4. Système selon l'une quelconque des revendications précédentes, dans lequel l'unité de réception est une unité complexe racine dans un réseau PCIe et le mécanisme de stockage comprend un tableau d'unités qui est indexé par des identifiants d'unités requérantes.

5. Système selon l'une quelconque des revendications précédentes, dans lequel l'unité de réception est un point terminal de réseau PCIe et le mécanisme de stockage comprend un registre correspondant à l'unité requérante.

6. Système selon l'une quelconque des revendications précédentes, comprenant en outre un mécanisme de paquets d'écriture postés à une unité requérante pour accéder à un paquet d'écriture posté de réseau PCIe qui identifie une unité de réception et pour l'insertion d'un identifiant de balise courant correspondant à l'unité de réception dans un champ de balise dans le paquet d'écriture posté dans un réseau PCIe ;
un mécanisme de stockage à l'unité requérante pour stocker l'identifiant actuel de balise correspondant à l'unité de réception ;
un transmetteur à l'unité requérante en communication avec un commutateur de réseau PCIe pour transmettre le paquet d'écriture posté dans le réseau PCIe à l'unité de réception via le commutateur de réseau PCIe.

7. Système selon la revendication 6, comprenant en outre un incrémenteur à l'unité requérante pour incrémenter l'identifiant actuel de balise correspondant à l'unité de réception en réponse à l'insertion achevée.

8. Procédé pour le traitement de paquets dans un réseau PCIe, le procédé comprenant :
la réception d'un paquet d'écriture posté via un PCIe, le paquet d'écriture posté via un PCIe comprenant un identifiant de balise reçu et un identifiant d'unité requérante identifiant une unité de demande,
la détermination d'un identifiant de balise attendu pour l'unité requérante ;
la comparaison de l'identifiant de balise reçu avec l'identifiant de balise attendu ;
et le placement d'une balise d'erreur en réponse à l'identifiant de balise reçu ne correspondant pas à l'identifiant de balise attendu.

9. Procédé selon la revendication 8, dans lequel le procédé comprend en outre l'incrémentation de l'identifiant de balise attendu pour l'unité requérante en réponse à la comparaison achevée.

10. Procédé selon la revendication 8 ou la revendication 9, comprenant en outre l'accès à une unité de requête à un identifiant de paquet d'écriture posté dans un réseau PCIe pour une unité de réception,
la détermination d'un identifiant actuel de balise correspondant à l'unité de réception ;
l'insertion d'un identifiant actuel de balise dans un champ de balise dans le paquet d'écriture posté ; et
la transmission du paquet d'écriture posté à l'unité de réception.

11. Procédé selon l'une quelconque des revendications 8 à 10, comprenant en outre l'incrémentation de l'identifiant actuel de balise correspondant à l'unité de réception en réponse à l'insertion achevée.

12. Procédé selon l'une quelconque des revendications 8 à 11, dans lequel l'identifiant actuel de balise sur l'unité requérante est synchronisé périodiquement avec un identifiant de balise attendu sur l'unité de réception.

13. Procédé selon l'une quelconque des revendications 8 à 12, dans lequel l'unité requérante est une unité racine complexe dans le réseau PCIe et la détermination d'un identifiant actuel de balise comprend l'accès à une ou plusieurs tables de consultation d'adresses et d'un tableau hiérarchique décroissant de balises (down-bound tag table).

14. Procédé selon l'une des revendications 8 à 13, dans lequel l'unité de demande est un point terminal dans un réseau PCIe et la détermination de l'identifiant actuel de balise comprend la lecture d'un registre correspondant à l'unité de réception.

15. Programme informatique comprenant un code de programme informatique pour amener, une fois chargé et exécuté sur un système informatique, ledit système informatique à exécuter toutes les étapes du procédé selon l'une quelconque des revendications 8 à 14.
